## Europäisches Patentamt
## European Patent Office
## Office européen des brevets

(19)

(11) Veröffentlichungsnummer : **0 140 060**
**B1**

(12) **EUROPÄISCHE PATENTSCHRIFT**

(45) Veröffentlichungstag der Patentschrift :
04.05.88

(21) Anmeldenummer : 84110662.8

(22) Anmeldetag : 07.09.84

(51) Int. Cl.⁴ : **F 16 L 19/06**

(54) **Dichtungsring für Rohrverbindungen.**

(30) Priorität : 20.09.83 DE 3333866

(43) Veröffentlichungstag der Anmeldung :
08.05.85 Patentblatt 85/19

(45) Bekanntmachung des Hinweises auf die Patenterteilung : 04.05.88 Patentblatt 88/18

(84) Benannte Vertragsstaaten :
AT BE CH FR GB IT LI LU NL SE

(56) Entgegenhaltungen :
DE-A- 2 700 925
DE-C- 1 296 901
US-A- 2 544 109
US-A- 2 553 981
US-A- 2 641 489
US-A- 3 079 182
US-A- 3 245 700

(73) Patentinhaber : ERMETO Armaturen GmbH
Am Metallwerk 9
D-4800 Bielefeld 12 (DE)

(72) Erfinder : Castrup, Rolf
Veilchenstrasse 5
D-4804 Versmold-Oesterweg (DE)

(74) Vertreter : Linser, Heinz et al
Patentanwälte Heinz Linser Dipl. Ing. Eckhardt Eyer
Robert-Bosch-Strasse 12a Postfach 10 22 10
D-6072 Dreieich (DE)

## Beschreibung

Die Erfindung betrifft einen Dichtungsring für Rohrverbindungen mit außen und innen konisch verlaufendem Vorderteil und zwei am Innenmantel vorhandenen Schneidkanten mit unterschiedlichen Durchmessern, der zwischen einem mit Innenkonus versehenen Anschlußstück und einer als Anpreßstück ausgebildeten Überwurfmutter einlegbar ist, und beim Anziehen des Anpreßstückes axial auf einem feststehenden Anschlußrohrende vorgeschoben wird und dabei mit seinen Schneidkanten in den Rohrmantel unter definiertem Materialaufwurf einschneidet, wobei der Dichtungsring — im Anlieferungszustand — eine in seinem Außenmantel eingebrachte Eindrehung aufweist, welche — un Vorschubrichtung gesehen — in einer Radialebene mit geringem Abstand hinter einer durch die zweite Schneidkante gedachten Radialebene liegt.

Die Erfindung betrifft ferner ein Verfahren zur Montage einer Rohrverbindung unter Verwendung eines Dichtungsringes der eingangs aufgeführten Art.

Ein bekannter Dichtungsring, welcher beispielsweise aus der DE-C-1.296.901 hervorgeht, weist zwei hintereinanderliegende im Durchmesser unterschiedliche Ringschneiden auf, wobei die in Bewegungsrichtung zurückliegende Schneide einen größeren Ringdurchmesser als die erste Schneide hat und an der Rückenfläche einen kegeligen Übergang zum zylindrischen Innenmantel des rückwärtigen Teiles des Dichtungsringes aufweist, der sich in der letzten Phase des Montagevorganges plastisch an das Rohr anlegt, jedoch keinen exakten Anschlag der durchgeführten Montage spürbar macht. Dadurch ist die Gefahr gegeben, daß bei der Montage ein Überziehen der Verschraubung bewirkt wird.

Es ist aus der FR-A-23 94 736 eine Dichtungsringanordnung bekannt, welche einen Schneidring mit einer vorderen und einer hinteren Abrißstelle aufweist. Die Kraftwirkung bei der Montage dieser Dichtungsringanordnung erfolgt durch ein Schraubteil, so daß die dem Schraubteil zugekehrte Abrißstelle stets eine nachteilige Quetschoder Klemmfunktion ausübt, wodurch die Rohrwandung eingedrückt wird. Erfolgt der Abriß der dem Schraubteil zugewandten Sollbruchstelle früher als der Abriß der vorderen Sollbruchstelle oder gleichzeitig, so erzeugt der Klemmring einen Graben auf dem Rohrmantel. Ein solcher Graben trägt nicht zur Dichtung bei, sondern bewirkt das Gegenteil. Ferner ist der Zeitpunkt des Abrisses der Sollbruchstellen nicht definiert, so daß der Monteur nicht deutlich genug das Ende der Montage aus dem aufzuwendenden Drehmoment erkennen kann.

Aus der DE-B-14 50 382 ist eine Rohrverschraubung bekannt, welche einen Dichtungsring der eingangs aufgeführten Art aufweist. Dieser bekannte Schneidring bildet ein Doppelgelenk in entgegengesetzten Richtungen, bedingt durch die unterschiedlichen Richtungen der ansetzenden Kraftkomponenten. Eine Eindrehung erlaubt unter Wirkung einer Konusfläche eine Gelenkwirkung in Richtung Rohrmantel und eine weitere Eindrehung unter Wirkung der konischen Stirninnenwand eine Gelenkwirkung zur Mutter unter Abhebung vom Rohrmantel. Bei dieser bekannten Schneidringanordnung entsteht, ähnlich wie bei den oben genannten Schneidringanordnungen, bei der Montage eine progressive Steigerung des Schneidringwiderstandes, die es dem Monteur nicht erlaubt das Ende der Montage aus dem aufzuwendenden Drehmoment zu erkennen.

Es ist bekannt, daß die meisten Fehler einer Rohrverbindung nicht systembedingt sind, sondern bei der Montage entstehen. Der Monteur wendet bei der Montage meist zuviel Kraft auf, wodurch insbesondere bei dünnwandigen Rohren eine Übermontage erzielt wird. Das zu verbindende Rohr verringert an der Verbindungsstelle seinen Querschnitt und es entstehen Verkantungen des Rohrendes, welche zu Leckagen führen.

Der Erfindung liegt daher die Aufgabe zugrunde, einen Dichtungsring anzugeben, welcher die Vorteile der bekannten mehrschneidigen Ringe aufweist, jedoch nicht ihre Nachteile, wobei insgesamt für die Montage ein geringerer Kraftaufwand benötigt werden soll, und es soll dem Monteur durch einen deutlichen und steilen Kraftanstieg während der Montage angezeigt werden, daß der Montagevorgang vollständig abgeschlossen ist. Ferner soll der Monteur die Möglichkeit haben visuell den Montagevorgang und die Qualität der hergestellten Verbindung überprüfen zu können.

Die Lösung dieser Aufgabe besteht gemäß der Erfindung darin, daß bei dem eingangs aufgeführten Dichtungsring die Eindrehung als Nut mit einer — in Vorschubrichtung betrachtet — vorderen radialen Seitenwandfläche ausgebildet ist, deren radial innere Kante eine Scherkante darstellt, die relativ zur radial äußeren Kante der die zweite Schneidkante tragenden Radialwand in axialer Richtung und — bedingt durch die Einstichtiefe der Nut — auch radialer Richtung entsprechend der Erzielung einer Sollbruchfläche zwischen ihren Kanten mit Vollendung des Einschnittvorganges der ersten Schneide angeordnet ist, wobei die Innenfläche des die erste Schneide tragenden Ringteiles als harte Gleitbahn für die zwischen ihren Kanten befindliche Sollbruchfläche ausgebildet ist, derart, daß die zweite Schneide parallel zur Gleitbahn in das Rohr unter Materialaufwurf eindringen kann. Der Bereich unterhalb der hinteren Kante weist somit eine definierte Schwächung des Ringquerschnittes zur Bildung einer plastischen Verformzone auf.

Der Grund der Nut ist in vorteilhafter Weise in Axialrichtung gerade ausgebildet.

Um sicherzustellen, daß die erste Schneidkante ihre Funktion vor der zweiten Schneidkante ausführt und beendet, ist gemäß der Erfindung der Ringdurchmesser (D) der zweiten Schneide des Dichtungsringes in an sich bekanner Weise größer als der Ringsdurchmesser (d) der ersten Schneide.

In einer vorteilhaften Ausführungsform der Erfindung weist der die erste Schneide tragende Ringteil des Dichtungsringes, der sich von der ersten Schneide bis zur zweiten Schneide erstreckt, zueinander parallel verlaufende Ringflächen auf. Dadurch ist die Möglichkeit gegeben, daß der vordere Ringteil nach seiner Trennung von dem Dichtungsring als zum üblichen 24° - Innenkonus des Anschlußstückes parallel angeordnete Gleitfläche für die zweite Schneide dienen kann.

Um die Trennung des ersten Ringsteiles von dem Dichtungsring zu ermöglichen ist daher die Verbindungsfläche zwischen dem sich aus dem Schnitt zwischen der vorderen Seitenwandfläche der Nut und ihrem Grund ergebende Kreis-Schnittlinie und der sich aus der zweiten Schneidkante und der Innenfläche des ersten Ringsteiles sich ergebende Kreis-Schnittlinie als Sollbruchstelle ausgebildet.

In vorteilhafter Weiterbildung der Erfindung ist es wesentlich, daß im Bereich der hinteren radialen Seitenwandfläche der Nut eine Zone vorhanden ist, die einer plastischen Verformung unterworfen werden kann. Gemäß der Erfindung nimmt daher der Innendurchmesser vom Bereich der hinteren Kante aus in Gegenvorschubrichtung vom Durchmesser (D) ausgehend stetig ab, bis er den Bohrungsdurchmesser (d) erreicht, welcher dem Bohrungsdurchmesser (d) der ersten Schneide entspricht.

Die Lösung der gestellten Aufgaben erfolgt ferner gemäß der Erfindung durch ein Verfahren gemäß Anspruch 6 zur Montage einer Rohrverbindung unter Verwendung eines Dichtungsringes der oben aufgeführten Art.

Die Erfindung wird anhand der Zeichnungen, in denen ein Ausführungsbeispiel dargestellt ist näher erläutert.

Hierbei zeigen :

Figur 1   einen Querschnitt eines Dichtungsringes nach der Erfindung im vergrößerten Maßstab, und die

Figuren   2 bis 5 jeweils einen Schnitt einer Rohrverschraubung in zeitlich verschiedenen Verschraubungsphasen.

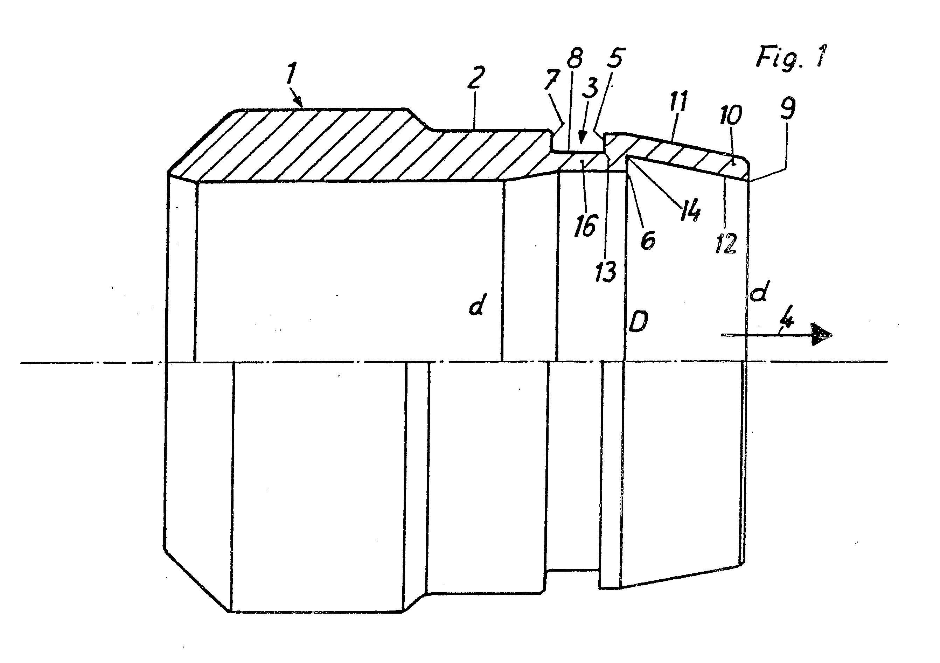

Die Figur 1 zeigt den Aufbau eines Dichtungsringes in einem vergrößerten Maßstab und im Anlieferungszustand. Der Dichtungsring 1 weist eine in seinem Außenmantel 2 eingebrachte Nut 3 auf, deren — in Vorschubrichtung 4 betrachtet — vordere radiale Seitenwandfläche 5 hinter der zweiten Schneidkante 6 angeordnet ist. Der Bereich unterhalb der hinteren radialen Seitenwandfläche 7 ist mit einer definierten Schwächung des Ringquerschnittes zur Bildung einer plastichen Verformzone versehen, deren Funktion später näher ausgeführt wird. Der Grund 8 der Nut 3 kann in Radialrichtung gewölbt oder auch gerade ausgebildet sein, wobei sich hierbei zwei unterschiedliche Funktionen ergeben. Der Ringdurchmesser D der zweiten Schneide 6 des Dichtungsringes 1 ist größer als der Ringdurchmesser d der ersten Schneide 9. Damit ist sichergestellt, daß die erste Schneide 9 bei der Montage, während der der erste Schneidringteil 10 entlang dem üblicherweise einen Öffnungswinkel von 24° aufweisenden Innenkonus des Anschlußstückes gleitet, als erste wirksam in das nicht näher dargestellte Rohr unter Materialaufwurf einschneidet. Hierfür kann der erste Schneidringteil 10 als 24°-Konus ausgebildet sein.

Die Verbindungsfläche zwischen der sich aus dem Schnitt zwischen der vorderen radialen Seitenwandfläche 5 der Nut 3 und ihrem Grund 8 ergebenden Kreis-Schnittlinie 13 und der sich aus der zweiten Schneidkante 6 und der Innenfläche 12 des ersten Schneidringsteiles 10 sich ergebenden Kreis-Schnittlinie 14 ist als Sollbruchstelle ausgebildet.

Der erste Schneidringteil 10 des Dichtungsringes 1, der sich von der ersten Schneide 9 bis zur zweiten Schneide 6 erstreckt, weist zueinander parallel verlaufende Ringflächen 11 und 12 auf, so daß nach dem Aufbrechen der Sollbruchstelle der sich bildende die Schneide 6 aufweisende zweite Ring 16 mit seiner der Schneide 6 abgewandten Bruchseite an der Ringfläche 12 des nun gebildeten ersten Schneidringes 10 entlanggleiten kann, wie noch ausführlich beschrieben wird. Da der Dichtungsring insgesamt oberflächengehärtet ist, kann die Sollbruchstelle ohne Verkantung auf der Ringfläche 12 gleiten, um ebenfalls unter dem dem Innenkonus des Anschlußstückes entsprechenden Konuswinkel von 24° in den Rohrmantel unter Materialaufwurf einzuschneiden.

Bei diesem Gleitvorgang erfährt der gebildete zweite Schneidringteil 16 im Bereich der hinteren radialen Seitenwandfläche 7 eine Umlenkung in die 24°-Ebene. Aus diesem Gründen ist es erforderlich, hierfür entsprechende Maßnahmen zu treffen. Um daher die Bildung einer plastischen Zone zur Erzielung einer Gelenkfunktion zu ermöglichen, nimmt der Innendurchmesser des Dichtungsringes vom Bereich der hinteren radialen Seitenwandfläche 7 aus in Gegenvorschubrichtung vom Durchmesser D ausgehend stetig ab, bis er den Bohrungsdurchmesser d erreicht, welcher dem Bohrungsdurchmesser d der ersten Schneide 9 entspricht. Damit bildet sich im Bereich der hinteren radialen Seitenwandfläche 7 durch einen plastischen Verformvorgang ein Gelenk aus, so daß der zweite gebildete Ringteil 16 ebenfalls unter einem Winkel von 24° in den Mantel des Rohres einschneidet, und zwar zu einem Zeitpunkt, zu dem der erste gebildete Schneidring 10 bereits seinen Einschneidvorgang beendet hat.

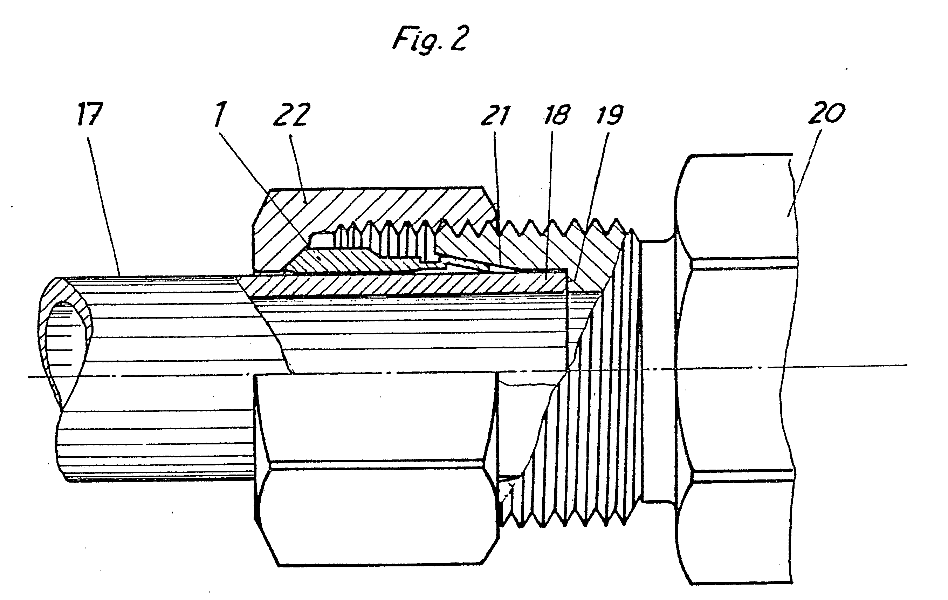

Das Montageverfahren wird anhand der Figuren 2 bis 5 zusammenfassend wie folgt dargestellt.

Das zu verbindende Rohr 17, auf dessen Rohrende 18 der Dichtungsring 1 bereits aufgesetzt ist, wird bis zum innereren Anschlag 19 des Anschlagstückes 20 eingeführt, so daß die äußere Konusfläche 11 des ersten Schneidringsteiles 10 des Dichtungsringes 1 gegen die innere Konusfläche 21 des Anschlagstückes 20 anliegt. Hierzu wird auf die Figur 2 verwiesen, welche die erste Phase der Montage wiedergibt.

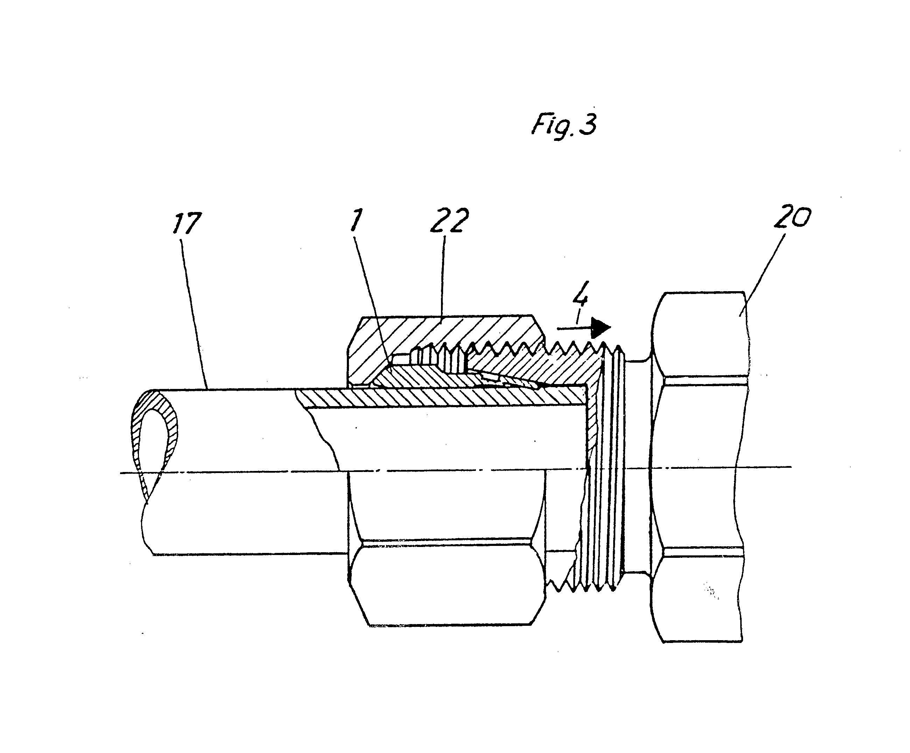

Die als Anpreßstück ausgebildete Überwurfmutter 22, die zuvor über das Rohrende 19 oder von dem anderen Ende des Rohres aus aufgeschoben wurde, wird mit dem Anschlagstück 20 mit stetig zunehmendem Drehmoment verschraubt, wobei die erste Schneide 9 des ersten Schneidringteiles 10 des Dichtungsringes 1 in das Rohr 17 einschneidet. Diese Montagephase ist in der Figur 3 dargestellt.

Nachdem die erste Schneide 9 einen ausreichenden Einschnitt im Rohr 17 erzielt hat, nimmt bei Weiterdrehung der Überwurfmutter 22 das aufzubringende Drehmoment schlagartig ab. Hierdurch wird dem Monteur deutlich angezeigt, daß nunmehr die Sollbruchstelle gebrochen ist und der erste Schneidringteil 10 seinen Einschneidvorgang beendet hat.

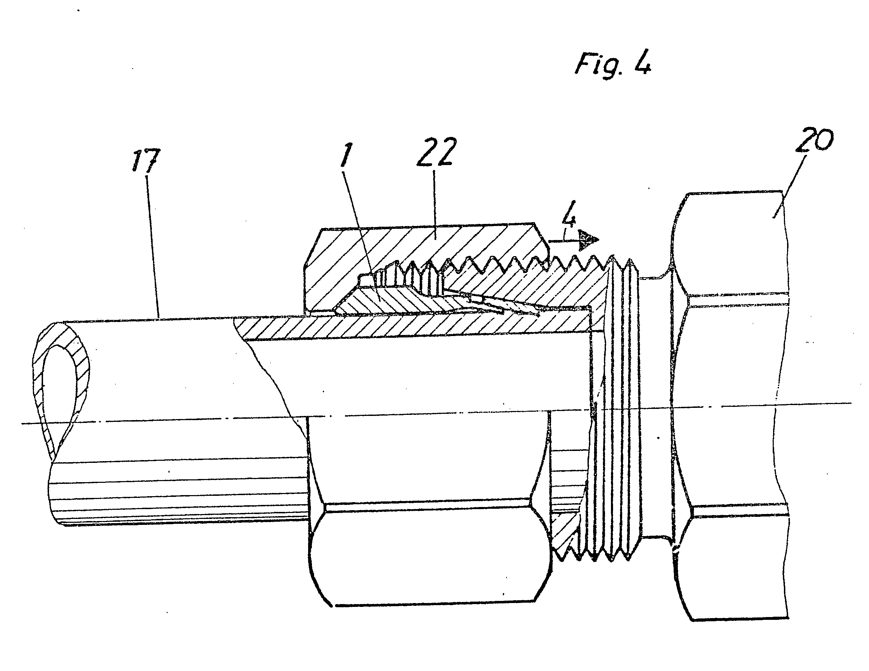

Bei Weiterdrehung der Überwurfmutter 22 schiebt sich die relativ weiche Bruchstelle des sich nun gebildeten zweiten Ringes 16 unter die Innenfläche 12 des nun gebildeten ersten Schneidringes 10 und wird dadurch parallel zum 24°-Konus in einem definierten Abstand vom ersten Einschnitt in den Rohrmantel des zu verbindenden Rohres 17 eingetrieben, wie aus der Figur 4 zu entnehmen ist. Hierbei steigt das durch den Monteur über die Überwurfmutter 22 aufzubringende Drehmoment etwa im gleichen Maße an wie bei dem Einschneidvorgang des ersten gebildeten Schneidringsteiles 10.

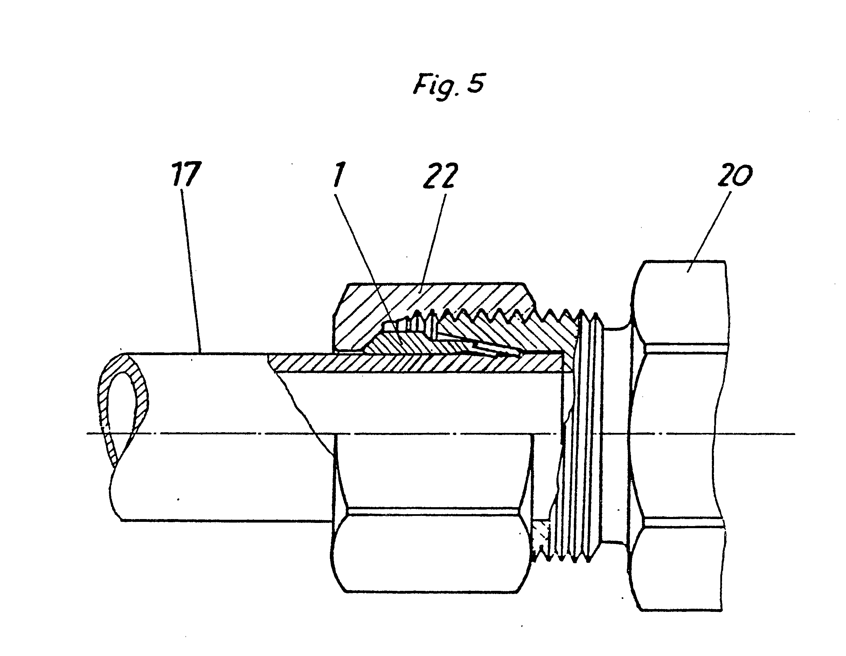

Während bei diesem Vorgang die vordere radiale Seitenwandfläche 5 des ersten gebildeten Schneidringsteiles 10 wegen seines beendeten Einschneidvorganges festliegt, nähert sich die hintere radiale Seitenwandfläche 7 der vorderen radialen Seitenwandfläche 5 bis zu ihrem Anschlag. Wenn dieser Punkt erreicht ist, steigt das durch den Monteur über die Überwurfmutter 22 aufzubringende Drehmoment steil an und die zweite Schneidkante 6 des zweiten Schneidringteiles 16 hat nun ebenfalls ihren Einschneidvorgang unter Materialaufwurf vollständig beendet, so daß damit auch die Montage der Rohrverbindung abgeschlossen ist. Dieser Montagezustand ist in der Figur 5 dargestellt.

Durch den unterschiedlichen Drehmomentverlauf in den einzelnen Montagephasen ist der Monteur stets über den jeweiligen Montagezustand informiert.

Der Dichtungsring nach der vorliegenden Erfindung weist eine ganze Reihe von Vorteilen auf, die im folgenden näher aufgeführt werden.

Mit der Sollbruchstelle werden mehrere Probleme gelöst. Der Einschneidvorgang der zweiten gebildeten Schneide kann grundsätzlich erst dann erfolgen, wenn der Einschneidvorgang des ersten Schneidringes vollständig abgeschlossen ist. Dieser Vorgang bzw. Zustand wird dem Monteur deutlich durch die schlagartige Abnahme des aufzuwendenden Drehmomentes angezeigt. Die Einschneivorgänge erfolgen daher in jedem Falle zeitlich und räumlich hintereinander. Dies hat den großen Vorteil, daß die benötigten Kräfte sich zeitlich nicht überschneiden, so daß stets nur ein geringer Kraftaufwand erforderlich ist.

Die Sollbruchstelle sorgt in Verbindung mit dem gelenkigen Verhalten des sich bildenden zweiten Schneidringteiles an der Verbindungsstelle mit seinem Basisring dafür, daß bei dem weiteren Montagevorgang zum Einschneiden der zweiten Schneide des zweiten gebildeten Ringteiles in den Rohrmantel der zweite Schneidringteil auf einen Konus von 24° umgelenkt wird.

Die Bruchstelle des zweiten gebildeten Schneidringes gleitet an der gehärteten Innenfläche des ersten Schneidringes entlang, so daß kein Verkanten möglich ist. Der zweite Schneidringteil erhält aber auch dadurch einen Einschnittwinkel, der ein Einschneiden gewährleistet und ein Entlangschaben auf der Rohrmantelfläche ausschließt.

Schließlich wird auch das Ende der Montage dem Monteur deutlich angezeigt, da hierbei die radialen Seitenwandflächen der Nut als Stoppkanten wirken und ein steiler Widerstand beim Anschlag der Seitenwandflächen auftritt.

Durch Lösen der Überwurfmutter kann der Montagezustand visuell überprüft werden. Dies wird durch Vergleich der Figuren 4 und 5 deutlich. Bei der Figur 4 berühren sich die radialen Seitenwandflächen 5 und 7 noch nicht, so daß ein sichtbarer Spalt anzeigt, daß der Montagevorgang noch nicht abgeschlossen ist. Gemäß Figur 5 stoßen die Seitenwandflächen 5 und 7 gegeneinander, woraus sichtbar ist, daß der Montagevorgang beendet ist.

Beim Lösen der Überwurfmutter verbleiben die gebildeten Schneidringteile jeweils in ihrem auf dem Rohrmantel eingeschnittenen Bett und beim erneuten Anziehen der Überwurfmutter werden die Ringteile wieder in ihre Eingrabungen gepreßt. Damit wird auch bei einer Wiederholmontage des Ende der Montage angezeigt. Selbst wenn die Ringteile sich nach einem Lösen der Überwurfmutter gegenseitig verdrehen, reichen bei der erneuten Montage die Kräfte aus, um ein druckdichtes Verschließen zu gewährleisten.

Ferner werden radial auftretende Kräfte durch den ersten Ringteil aufgefangen, da dieser als ein gehärteter zweiter Konus wirkt, welcher als Ausfütterung des Konus des Anschlagstückes dient.

**Patentansprüche**

1. Dichtungsring (1) für Rohrverbindungen mit außen und innen konisch verlaufendem Vorderteil und zwei am Innenmantel vorhandenen Schneidkanten (9, 6) mit unterschiedlichen Durchmessern, der zwischen einem mit Innenkonus versehenen Anschlußstück (20) und einer als Anpreßstück ausgebildeten Überwurfmutter (22) einlegbar ist, und beim Anziehen des Anpreßstückes axial auf einem feststehenden Anschlußrohrende (18) vorgeschoben wird und dabei mit seinen Schneidkanten in den Rohrmantel unter definiertem Materialaufwurf einschneidet, wobei der Dichtungsring — im Anlieferungszustand — eine in seinem Außenmantel eingebrachte Eindrehung aufweist, welche — in Vorschubrichtung gesehen — in einer Radialebene mit geringem Abstand hinter einer durch die zweite Schneidkante gedachten Radialebene liegt, dadurch gekennzeichnet, daß die Eindrehung als Nut (3) mit einer — in Vorschubrichtung (4) betrachtet — vorderen radialen Seitenwandfläche (5) ausgebildet ist, deren radial innere Kante (13) eine Scherkante darstellt, die relativ zur radial äußeren Kante (14) der die zweite Schneidkante (6) tragenden Radialwand in axialer Richtung und — bedingt durch die Einstichtiefe der Nut (3) — auch in radialer Richtung entsprechend der Erzielung einer Sollbruchfläche zwischen den Kanten (13) und (14) mit Vollendung des Einschnittvorganges der ersten Schneide (9) angeordnet ist und daß die Innenfläche (12) des die erste Schneide (9) tragenden Ringteiles (10) als harte Gleitbahn für die zwischen den Kanten (13) und (14) befindliche Sollbruchfläche ausgebildet ist, derart, daß die zweite Schneide (6) parallel zur Gleitbahn (12) in das Rohr (17) unter Materialaufwurf eindringen kann.

2. Dichtungsring nach Anspruch 1 dadurch gekennzeichnet, daß der Grund (8) der Nut (3) in Axialrichtung gerade ausgebildet ist.

3. Dichtungsring nach Anspruch 1 oder 2, dadurch gekennzeichnet, daß der Ringdurchmesser (D) der zweiten Schneide (6) des Dichtungsringes (1) größer ist als der Ringdurchmesser (d) der ersten Schneide (9).

4. Dichtungsring nach Anspruch 1, 2 oder 3, dadurch gekennzeichnet, daß der die erste Schneide (9) tragende Ringteil (10) des Dichtungsringes (1), der sich von der ersten Schneide (9) bis zur zweiten, Schneide (6) erstreckt, zueinander parallel verlaufende Ringflächen (11, 12) aufweist.

5. Dichtungsring nach Anspruch 1 oder einem der voranstehenden, dadurch gekennzeichnet, daß sein Innendurchmesser vom Bereich der hinteren radialen Seitenwandfläche (7) der Nut (3) aus in Gegenvorschubrichtung vom Durchmesser (D) ausgehend stetig abnimmt, bis er den Bohrungsdurchmesser (d) erreicht, welcher dem Bohrungsdurchmesser (d) der ersten Schneide (9) entspricht.

6. Verfahren zur Montage einer Rohrverbindung unter Verwendung eines Dichtungsringes nach den Ansprüchen 1 bis 5, wobei der Dichtungsring (1) zwischen einem mit Innenkonus versehenen Anschlußstück (20) und einer als Anpreßstück ausgebildeten und zuvor über das Rohrende aufgeschobenen Überwurfmutter (22) eingelegt wird und beim Anziehen des Anpreßstückes axial auf einem feststehenden Anschlußrohrende (18) vorgeschoben wird, dadurch gekennzeichnet, daß die Überwurfmutter (22) mit dem Anschlagstück mit stetig zunehmendem Drehmoment verschraubt wird, bis die Sollbruchstelle bricht und das aufzubringende Drehmoment spürbar abnimmt und daß die Überwurfmutter sodann mit erneut stetig ansteigendem Drehmoment weiter angezogen wird, bis die hintere radiale Seitenwandfläche (1) der Nut gegen die vordere radiale Seitenwandfläche (5) derselben anschlägt und das jetzt aufzubringende Drehmoment steil ansteigt und damit anzeigt, daß die Montage beendet ist.

## Claims

1. Seal ring (1) for pipe connections with an inner and outer conical surface of the front part and two cutting edges (9, 6) of different diameters at the inner surface, said seal ring being insertable between a connecting piece (20) having an inner conical surface and a coupling nut (22) formed as a pressure member, and moving axially on a stationary end (18) of the tube when the pressure member is screwed down and thereby cutting into the tube wall with its cutting edges by piling up definite tube material, whereby the seal ring — before assembled — comprises an annular recess at its outer wall, which is disposed in a radial plane with low distance behind an assumed radial plane extending through the second cutting edge, characterized in that the recess is formed as a groove (3) having a radial front shoulder (5) — viewed in direction (4) of movement during assembly —, the radial inner edge (13) of which forming a shearing edge which is disposed relatively to the radial outer edge (14) of the radial shoulder comprising the second cutting edge (6) in axial direction and — subject to the depth of the groove (3) — also in radial direction corresponding to the predetermined breaking zone between the edges (13) and (14) when completing the cutting process by the first cutting edge (9) and that the inner surface (12) of the ring (10) comprising the first cutting edge (9) is performed as a hard sliding surface for the predetermined breaking zone between the edges (13) and (14) whereby the second cutting edge (6) can penetrate into the tube (17) parallel to the sliding surface (12) by piling up tube material.

2. Seal ring according to claim 1, characterized in that the base wall (8) of the groove is straigtly performed in axial direction.

3. Seal ring according to claim 1 or 2, characterized in that the diameter (D) of the second cutting edge (6) is larger than the diameter (d) of the first cutting edge (9).

4. Seal ring according to claim 1, 2 or 3, characterized in that the ring (10) of the seal ring (1) comprising the first cutting edge (9) extends from the first cutting edge (9) to the second cutting edge (6) and comprises annular surfaces (11, 12) parallel to one another.

5. Seal ring according to claim 1 or one of the preceding claims, characterized in that its inner diameter is steadily decreasing beginning slightly at the zone of the radially directed rear shoulder (7) of the groove (3) from diameter (D) in opposite direction of movement until attaining diameter (d) of the bore corresponding to the diameter (d) of the first cutting edge (9).

6. Method of assembling a tube fitting using a seal ring according to claims 1 to 5, whereby the seal ring (1) will be inserted between a connecting piece (20) having an inner conical surface and a coupling nut (22) formed as a pressure member and set up before from the end of the tube, which will be axially moved on a stationary connecting tube (18) when the pressure member is screwed down, characterized in that the coupling nut (22) is screwed with the connecting piece (20) by a steadily increasing torque moment until the predetermined breaking zone is broken and the applied torque moment decreases evidently and that the coupling nut (22) is continued to be screwed down again by a steadily increasing torque moment until the back shoulder (7) of the groove abuts against the front shoulder (5) and the torque moment applied now steeply increases and signals an end to the assembly.

## Revendications

1. Anneau d'étanchéité (1) pour raccords de tuyaux qui comprend une partie antérieure extérieurement et intérieurement conique et deux arêtes coupantes (9, 6) de diamètres différents dans l'enveloppe intérieure, qui peut être intercalé entre une pièce de raccord (20) présentant un cône intérieur et un écrou d'accouplement (22) constituant une pièce de serrage et qui, lors du serrage de cette pièce, est déplacé dans le sens axial vers l'avant sur une extrémité fixe (18) du tube de raccordement et, de ce fait, pénètre dans l'enveloppe du tube en la coupant au moyen de bords de coupe et en refoulant une certaine quantité de matière, cet anneau d'étanchéité comportant — dans l'état dans lequel il est livré — une gorge tournée dans la masse dans son enveloppe extérieure dans un plan radial situé, dans le sens de l'avance, à une faible distance derrière un plan radial imaginaire passant par le deuxième bord de coupe, caractérisé en ce que la gorge tournée dans la masse est une rainure (3) qui comporte une surface de paroi latérale (5) radiale située en avant — dans le sens (4) de l'avance — dont le bord (13) situé à l'intérieur dans le sens radial constitue un bord de coupe qui est placé dans le sens axial par rapport au bord (14) situé à l'extérieur dans le sens radial de la paroi radiale qui porte la deuxième arête coupante (6) et également dans le sens axial — compte tenu de la profondeur de la rainure (3) — de manière à réaliser une zone de rupture obligée entre les bords (13) et (14) au moment de l'opération de coupe de la première arête coupante (9) et en ce que la surface intérieure (12) de la partie annulaire (10) qui porte la première arête coupante (9) constitue une glissière dure pour la surface de rupture obligée située entre les bords (13) et (14) de telle manière que la deuxième arête coupante (6) peut pénétrer dans le tube (17) parallèlement à la glissière (12) en refoulant de la matière.

2. Anneau d'étanchéité selon la revendication 1, caractérisé en ce que le fond (8) de la rainure (3) est rectiligne dans le sens axial.

3. Anneau d'étanchéité selon la revendication 1 ou 2, caractérisé en ce que le diamètre annulaire (D) de la deuxième arête coupante (6) de l'anneau d'étanchéité (1) est plus grande que le diamètre annulaire (d) de la première arête coupante (9).

4. Anneau d'étanchéité selon les revendications 1, 2 ou 3, caractérisé en ce que la partie annulaire (10) de l'anneau d'étanchéité (1) qui porte la première arête coupante (9) et qui s'étend de la première arête coupante (9) à la deuxième arête coupante (6) comporte des surfaces annulaires (11, 12) parallèles les unes aux autres.

5. Anneau d'étanchéité selon la revendication 1 ou l'une des revendications précédentes, caractérisé en ce que son diamètre intérieur diminue constamment à partir de la surface de paroi latérale (7) de la rainure (3) qui est située en arrière dans le sens radial et dans le sens inverse de l'avance, pour passer du diamètre (D) au diamètre d'alésage (d) qui correspond au diamètre d'alésage (d) de la première arête coupante (9).

6. Procédé de montage d'un raccord de tuyau comportant l'utilisation d'un anneau d'étanchéité selon l'une des revendications 1 à 5, dans lequel l'anneau d'étanchéité (1) est intercalé entre une pièce de raccord (20) présentant un cône intérieur et un écrou d'accouplement (22) constituant une pièce de serrage et monté à l'avance sur l'extrémité du tube et qui, lors du serrage de cette pièce, est déplacé dans le sens axial vers l'avant sur une extrémité fixe (18) du tube de raccordement, caractérisé en ce que l'écrou d'accouplement (22) et la pièce de butée sont vissés avec un moment de rotation qui augmente constamment jusqu'à ce que la zone de rupture obligée se brise et que le moment de rotation à appliquer diminue nettement et en ce que l'écrou d'accouplement est de nouveau serré avec un moment de rotation qui augmente de nouveau constamment jusqu'à ce que la surface de paroi latérale (7) de la rainure qui est située en arrière dans le sens radial vienne buter contre la surface de paroi latérale (5) qui est en avant dans le sens radial et le moment de rotation qui doit être appliqué à ce moment augmente brusquement, ce qui indique que le montage est terminé.

Fig. 1

0 140 060

Fig. 2

17  1  22  21  18  19  20

0 140 060

Fig.3

Fig. 4

Fig. 5

17    1    22    20

0 140 060